# EUROPÄISCHE PATENTANMELDUNG

(11) **EP 2 366 615 A1**
(43) Veröffentlichungstag der Anmeldung: **21.09.2011**
(21) Anmeldenummer: 11158452.0
(22) Anmeldetag: 16.03.2011
(51) Int. Cl.: B62M 3/08

(54) **Fahrradpedal**

(30) Priorität: 18.03.2010 DE 202010003828 U
(71) Anmelder: RTI Sports Vertrieb von Sportartikeln GmbH, 56220 Urmitz (DE)
(72) Erfinder: Stölting, Dirk, 56070 Koblenz (DE)
(74) Vertreter: von Kreisler Selting Werner

(57) **Zusammenfassung**

Ein Fahrradpedal weist einen Pedalkörper (10) mit zueinander gegenüber liegenden Aufstandsflächen (12) auf. Der Pedalkörper (10) ist über eine Pedalachse (16) drehbar gehalten. Die Aufstandsflächen (12) weisen jeweils ein Oberflächenelement (16) auf. Das Oberflächenelement weist insbesondere Kornelemente auf, so dass es sich um ein rutschhemmendes Oberflächenelement handelt.

## Beschreibung

Die Erfindung betrifft ein Fahrradpedal.

Um eine gute und gleichmäßige Kraftübertragung auf das Fahrradpedal zu gewährleisten, muss die Lage des Fußes relativ zum Pedal, insbesondere zur Pendelachse, definiert sein. Dies wird bei bekannten Fahrradpedalen, die insbesondere bei Sporträdern verwendet werden durch so genannte Klick-Pedale, realisiert. Hierbei ist an der Schuhsohle ein Rastelement vorgesehen, das mit einem am Pedalkörpers vorgesehen Rastelement zusammenwirkt. Das Pedalsystem weist den Nachteil auf, dass spezielle Schuhe verwendet werden müssen, Aufgrund des vorstehenden Rastelements an der Schuhsohle sind diese Schuhe ferner zum Gehen ungeeignet. Ein weiterer Nachteil von Klick-Pedalen besteht darin, dass besonders für den ungeübten Benutzer die Gefahr besteht, den Fuß nicht rechtzeitig aus dem Pedal lösen zu können. Dies kann beispielsweise beim Anhalten oder in Gefahrensituationen zu Stürzen führen. Klick-Pedale haben sich daher nur im Sportbereich durchgesetzt. Insbesondere für Stadträder, Trekkingräder oder dergleichen sind Klick-Pedale ungeeignet.

Herkömmliche Pedale weisen den Nachteil auf, dass die Stellung des Fußes auf dem Pedal nicht definiert ist. Insbesondere kann der Fuß auf einer Aufstandfläche des Pedalkörpers leicht verrutschen, sodass sich die Stellung des Fußes häufig verändert. Dies führt dazu, dass die Kraftübertragung beeinträchtigt ist. Insbesondere können durch derartige Fehlstellungen erhebliche Belastungen der Gelenke auftreten. Der Fuß wird ferner in Pedallängsrichtung, d.h. in Fahrtrichtung häufig zu weit nach vorne gesetzt. Dies führt dazu, dass die Kraftübertragung nicht im Bereich des Fußballens bzw, des Großzehengelenks erfolgt, obwohl hier die effektivste Kraftübertragung gegeben wäre.

Aufgabe der Erfindung ist es, ein Fahrradpedal zu schaffen, bei dem die Lage des Fußes relativ zu dem Pedal auch bei einer nicht festen Verbindung zwischen Schuh und Pedal verbessert ist.

Die Lösung der Aufgabe erfolgt erfindungsgemäß durch die Merkmale des Anspruchs 1.

Das erfindungsgemäße Fahrradpedal ist derart ausgebildet, dass keine feste Verbindung zwischen einer Schuhsohle und dem Pedal erfolgt. Insbesondere sind keine Rastelemente oder dergleichen wie bei Klick-Pedalen vorgesehen. Das Fahrradpedal weist einen vorzugsweise aus Kunststoff hergestellten Pedalkörper auf. Der Pedalkörper bildet mindestens eine Aufstandfläche für den Schuh. Üblicherweise weist der Pedalkörper zwei einander gegenüber liegende Aufstandflächen auf, so dass der Fuß unabhängig von der Stellung des Pedals aufgesetzt werden kann. Der Pedalkörper ist durch eine Pedalachse drehbar gehalten, wobei die Pedalachse üblicherweise in eine Gewindebohrung der Tretkurbel einschraubbar ist.

Erfindungsgemäß weist der Pedalkörper auf der mindestens einen Aufstandfläche zumindest teilweise ein rutschhemmendes Oberflächenelement auf. Das rutschhemmende Oberflächenelement ist vorzugsweise zumindest im vorderen Bereich, insbesondere im vorderen Drittel der Aufstandfläche, vorgesehen. Hierbei handelt es sich um den in Fahrtrichtung weisenden Bereich der Aufstandsfläche. Durch das rutschhemmende Oberflächenelement ist ein Verrutschen des Schuhs auf dem Pedal vermieden, oder die Gefahr des Verrutschens ist zumindest verringert. Dies erhöht zunächst die Sicherheit, da im Straßenverkehr die Gefahr des Abrutschens von dem Pedal verringert ist. Ferner weist das erfindungsgemäße Vorsehen eines rutschhemmenden Oberflächenelements den Vorteil auf, dass ein, zur Verbesserung der Kraftübertragung richtig positionierter Fuß üblicherweise in dieser Stellung verbleibt und die Stellung nicht, aufgrund einfachen Verrutschens des Fußes, wieder verschlechtert wird.

In besonders bevorzugter Ausführungsform ist das rutschhemmende Oberflächenelement durch Verkleben oder Verschweißen mit der Aufstandsfläche verbunden. Hierbei ist es bevorzugt, dass das Oberflächenelement als Folie ausgebildet ist. Hierbei kann an einer Unterseite der Folie ein Klebstoff vorgesehen sein, um ein Verkleben des Oberflächenelements auf der Aufstandfläche zu ermöglichen. Es ist auch möglich, dass die Verbindung der Folie mit der Aufstandfläche durch das Einbringen von Wärme, Ultraschall oder dergleichen, d. h. durch einen Schweißvorgang erfolgt.

Vorzugsweise ist ein insbesondere als Folie oder dergleichen ausgebildetes rutschhemmendes Oberflächenelement in einer Vertiefung des Pedalkörpers angeordnet. Die Vertiefung weist hierbei eine Tiefe auf, die mindestens der Dicke des Oberflächenelements entspricht und besonders bevorzugt eine möglichst exakt gleiche Tiefe, die die Dicke des Oberflächenelements aufweist. Dies hat den Vorteil, dass das Oberflächenelement, das durch Bewegen des Schuhs starken seitlichen Kräften ausgesetzt ist, nicht oder zumindest nicht leicht zum Ablösen des Oberflächenelements von dem Pedalkörper führt. Insbesondere ist eine Seitenfläche des Oberflächenelements durch die Vertiefung geschützt. Selbstverständlich können in einer derartigen Vertiefung auch andere Arten von Oberflächenelementen, wie beispielsweise durch Streichen oder Aufspritzen hergestellte Oberflächenelemente angeordnet werden.

Ebenso ist es möglich, dass Oberflächenelement als eine aushärtbare Masse auszubilden und diese beispielsweise durch Streichen oder Aufspritzen mit der Aufstandfläche zu verbinden. Auch kann beispielsweise durch ein Lösungsmittel oder durch Temperatur ein Anlösen der Oberfläche des Aufstandelements erfolgen, sodass sodann das Oberflächenelement mit der Aufstandfläche verbunden oder in diese eingebracht werden kann.

Auch ist es möglich, das gesamte Material des Pedalkörpers mit rutschhemmenden Elementen zu versehen, sodass an der Oberfläche des Pedalkörpers automatisch ein rutschhemmendes Oberflächenelement entsteht. Ebenso kann der Pedalkörper als Mehrkomponenten-Bauteil ausgebildet sein, sodass eine obere Schicht, des insbesondere aus Kunststoff hergestellten Pedalkörpers Material aufweist, um ein rutschhemmendes Oberflächenelement auszubilden.

Bei einer weiteren bevorzugten Ausführungsform ist das rutschhemmende Material, wie Kornelemente und dergleichen, in die Spritzgussform eingebracht und wird durch Spritzen des aus Kunststoff hergestellten Pedalkörpers in die entsprechende Oberfläche des Pedalkörpers eingebettet. Auch ein Verbinden eines insbesondere flächigen Oberflächenelements mit dem Pedalkörper kann dadurch erfolgen, dass das Oberflächenelement in die Spritzgussform eingebracht und durch das Spritzen selbst fixiert wird. Hierbei können beispielsweise Ränder des Oberflächenelements während des Spritzgussvorgangs umspritzt werden. Sowohl bei derartigen umspritzten Oberflächenelementen als auch bei eingebetteten Kornelementen zur Ausbildung des Oberflächenelements besteht die Gefahr, dass sich das Oberflächenelement aufgrund der bei der Benutzung des Pedals auftretenden Belastungen löst, nicht.

Ferner ist es bei Verwendung eines geeigneten harten Kunststoffmaterials bei der Herstellung eines gespritzten Pedalkörpers möglich, eine Oberflächenstruktur auszubilden, durch die ein entsprechendes rutschhemmendes Oberflächenelement ausgebildet ist. Hierdurch können durch die Spritzgussform entsprechende feine Oberflächenstrukturen ausgebildet werden, die eine sehr gute Rutschhemmung bewirken. Insbesondere weist eine derartige Oberflächenstruktur eine Struktur auf, deren Erhebungen entsprechende Größe wie Kornelemente aufweisen. Insbesondere weisen die Erhebungen eine Querschnittsfläche von weniger als 2 mm², insbesondere weniger als 1 mm² auf.

Es ist besonders bevorzugt, dass das Oberflächenelement zur Ausbildung der rutschhemmenden Oberfläche Kornelemente aufweist. Bei den Kornelementen kann es sich um Sand, Glasperlen, harte Kunststoffelemente, anorganische Materialien wie beispielsweise Korund oder Mischungen aus diesen Materialien handeln. Bevorzugt ist es, dass die Kornelemente einen Durchmesser von 0-2 mm aufweisen. Dies bedeutet, dass die Kornelemente einen Maximaldurchmesser von 2 mm aufweisen. In einer weiteren bevorzugten Ausführungsform weisen die Kornelemente einen Durchmesser von 2-4 mm auf.

Zur Herstellung des erfindungsgemäßen rutschhemmenden Oberflächenelements kann dieses als Folie ausgebildet sein, die sodann beispielsweise durch Verschweißen oder Verkleben mit der Aufstandfläche verbunden wird. Die Folie weist beispielsweise in eine zähe dauerhafte Polymermasse eingebettete Kornelemente auf. Ebenso ist es möglich, die Kornelemente unmittelbar in das Material des Pedalkörpers einzubringen. Handelt es sich bei dem Pedalkörper beispielsweise um ein Spritzgussteil aus Kunststoff, können die Kornelemente unmittelbar in dieses Material eingebracht werden. Auch kann es sich hierbei um ein Mehrkomponenten-Bauteil handeln, wobei eine die Aufstandfläche ausbildende Schicht des Oberflächenmaterials sodann mit entsprechenden Kornelemente versetzt ist. Ferner ist es möglich, dass der Pedalkörper mehrteilig aufgebaut ist, beispielsweise ist ein käfigartiges, bzw. rahmenförmiges Element aus einem Kunststoffmaterial oder Metall vorgesehen, mit dem ein die Aufstandfläche ausbildendes, plattenförmiges Element aus Kunststoff oder dergleichen verbunden ist. Dieses plattenförmige Element kann sodann, wie vorstehend beschrieben, Kornelemente aufweisen.

Ferner ist es möglich, in die Spritzgussform Kornelemente einzustreuen, sodass während des Spritzgussvorgangs an der späteren Oberfläche des Spritzgussteils, insbesondere an der die Aufstandfläche ausbildenden Oberfläche, Kernelemente angeordnet sind. Ebenso ist es möglich, den fertiggestellten Pedalkörper an seiner Aufstandfläche, beispielsweise durch Lösungsmittel und/oder Wärme aufzuweichen, um sodann Kornelemente einzudrücken bzw einzustreuen. Nachdem erneuten Aushärten des Materials sind die Kornelemente sodann fest mit der Aufstandfläche des Pedalkörpers verbunden.

In einer bevorzugten Ausführungsform weist die mindestens eine Aufstandfläche eine Vertiefung auf. Die Vertiefung erstreckt sich über die gesamte Breite des Pedals, d. h. von einer in Richtung der Tretkurbel weisenden Innenseite des Pedalkörpers bis zu einer gegenüberliegenden Außenseite des Pedalkörpers. Die Vertiefung kann beispielsweise entsprechend einer Senke oder Rinne mit großem Radius ausgebildet sein. Ebenso kann die Vertiefung keilförmig ausgebildet sein, wobei sich beispielsweise ausgehend von einer Vorderseite sowie einer Hinterseite der Aufstandfläche geneigte Ebenen erstrecken, die sodann die Vertiefung ausbilden. Erfindungsgemäß weist die Vertiefung einen tiefsten Bereich auf. Dieser erstreckt sich vorzugsweise über die gesamte Pedalbreite. Es handelt sich bei dem tiefsten Bereich somit insbesondere um eine Art Tal- oder Senkengrund.

Durch das Vorsehen einer derartigen Vertiefung, wird der Fuß eines Fahrradfahrers intuitiv besser auf dem Pedal positioniert. Zunächst erfolgt kein Treten mehr mit dem Mittelfuß, da die Fuß- bzw. Schuhsohle nicht mehr flächig auf dem Pedal aufliegt, sondern nur an der Vorder- und Rückseite die Aufstandfläche des Pedals berühren würde. Der Benutzer schiebt den Fuß intuitiv nach hinten, da der Schuh und der Fuß im Bereich der Zehengelenke gekrümmt werden kann, sodass der Schuh wieder flächig auf dem Pedal aufliegt, Das Vorsehen einer Vertiefung wie einer Senke hat somit den ersten Vorteil, dass der Benutzer den Fuß, derart auf dem Pedal positioniert, dass die Kraftübertragung im Wesentlichen über den Fußballen, bzw. die Zehengrundgelenke erfolgt.

Besonders bevorzugt ist die Vertiefung derart ausgestaltet, dass sie keine Stufen aufweist, sondern insbesondere kontinuierlich verläuft. Insbesondere nimmt die Tiefe der Vertiefung, ausgehend von einer Rückseite der Aufstandfläche zum tiefsten Bereich der Vertiefung kontinuierlich zu. Besonders bevorzugt ist es, ausgehend vom tiefsten Bereich der Vertiefung zur Vorderseite der Aufstandfläche, dass die Tiefe kontinuierlich abnimmt. Um die Position des Fußes weiter zu verbessern und zu vermeiden, dass der Benutzer den Fuß geringfügig zu weit nach vorne auf dem Pedal aufsetzt, kann die Steigung, ausgehend von dem tiefsten Bereich der Vertiefung zur Vorderseite der Aufstandfläche ggf. etwas steiler, bzw. stärker verlaufen als im hinteren Bereich.

Die Tiefe der Vertiefung ist vorzugsweise über die gesamte Pedalbreite im Wesentlichen konstant. Gegebenenfalls kann die Vertiefung im äußeren Bereich der Aufstandfläche etwas geringer ausfallen, sodass der Fuß leicht nach innen gedrückt, bzw. gehalten wird. Hierdurch ist sichergestellt, dass der Fuß möglichst nah an der Tretkurbel auf das Pedal aufgesetzt wird.

In besonders bevorzugter Ausführungsform weist das Fahrradpedal mit Vertiefung ein rutschhemmendes Oberflächenelement auf. Dieses kann sich über die gesamte Aufstandfläche erstrecken, ist vorzugsweise jedoch nur im vorderen Bereich, d. h. in dem in die Fahrtrichtung weisenden Bereich der Aufstandfläche angeordnet, Insbesondere ist das Oberflächenelement nur auf der vorderen Hälfte, insbesondere nur auf dem vorderen Drittel der Aufstandfläche vorgesehen.

Vorzugsweise handelt es sich bei dem erfindungsgemäßen Pedal um ein Pedal mit zueinander gegenüberliegenden Aufstandflächen. Diese sind vorzugsweise identisch ausgebildet, sodass der Benutzer nicht darauf achten muss, auf welche der beiden Seiten er den Fuß aufsetzt. Es ist jedoch beispielsweise auch ein Kombinationspedal möglich, das auf der einen Seite als Knick-Pedals und auf der anderen Seite als erfindungsgemäß ausgestaltetes Pedal mit rutschhemmendem Oberflächenelement und/oder Vertiefung ausgebildet ist. Ein derartiges Pedal kann somit einerseits mit speziellen Schuhen, beispielsweise mit Klick-Verbindung genutzt werden und stellt andererseits auch bei der Verwendung herkömmlicher Schuhe beim Auftreten auf die erfindungsgemäß ausgebildete Aufstandfläche eine ergonomisch gute Haltung des Fußes sowie eine gute Kraftübertragung sicher.

Die Vertiefung weist im tiefsten Bereich gegenüber der Rückseite der Aufstandfläche und/oder der Vorderseite der Aufstandfläche vorzugsweise eine Tiefe von 1-4 mm insbesondere 2-3 mm auf.

Ferner betrifft die Erfindung die Verbindung eines rutschhemmenden Oberflächenelements auf einer Aufstandfläche eines Pedalkörpers eines Fahrradpedals. Hierbei ist das Oberflächenelement, wie vorstehend anhand des Fahrradpedals beschrieben, bevorzugt weitergebildet, wobei es sich insbesondere um eine Folie handelt, die Kornelemente aufweist und vorzugsweise auf die Aufstandfläche aufgeklebt werden kann.

Nachfolgend wird die Erfindung anhand einer bevorzugten Ausführungsform unter Bezugnahme auf die anliegenden Zeichnungen näher erläutert.

Es zeigen:

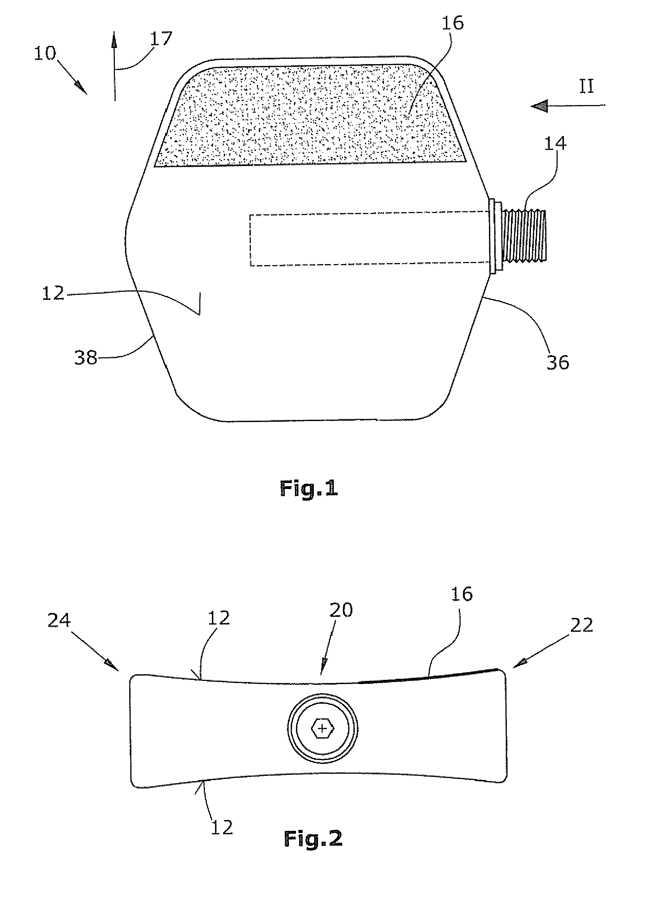

- Fig.1: eine schematische Draufsicht des erfindungsgemäßen Fahrradpedals und
- Fig. 2: eine Seitenansicht des Pedals in Richtung des Pfeils II in Figur 1.

Das Fahrradpedal weist einen Pedalkörper 10 auf. Der Pedalkörper 10 ist im dargestellten Ausführungsbeispiel mit zwei Aufstandflächen 12 versehen, sodass sowohl die Oberseite als auch die Unterseite des Pedalkörpers identisch ist. Innerhalb des Pedalkörpers ist in einem zylindrischen Hohlraum eine Pedalachse 14 angeordnet, um die sich der Pedalkörper 10 dreht. Die Pedalachse 14 ist derart angeordnet, dass eine Mittellinie der Pedalachse 14 senkrecht zu einer nicht dargestellten Tretkurbel verläuft. Die Befestigung des Pedals in der Tretkurbel erfolgt über den zylindrischen Ansatz 18 der Pedalachse 14, der mit einem Gewinde versehen ist.

Auf der Aufstandfläche 12 ist ein Oberflächenelement 16 angeordnet. Hierbei handelt es sich im dargestellten Ausführungsbeispiel beispielsweise um eine aufgeklebte Folie, die in eine Polymermasse eingebettete Mineralkörner oder andere Kornelemente aufweist.

Wie vorstehend erläutert können die Kornelemente auf unterschiedliche Weise in die Aufstandfläche eingebracht und/oder mit dieser verbunden werden. Im dargestellten Ausführungsbeispiel ist das Oberflächenelement, bezogen auf die Fahrtrichtung 17, im vorderen Drittel des Pedalkörpers angeordnet.

Die Aufstandflächen 12 des Pedalkörpers 10 weisen eine Vertiefung 20 auf, wobei die Vertiefung 20 in dem dargestellten Ausführungsbeispiel, durch eine konkave Ausgestaltung der Aufstandflächen 12 ausgebildet sind. Der Pedalkörper 10 ist somit derart ausgebildet, dass, ausgehend von einer Vorderseite 22 der Aufstandfläche 12, eine konkave Ausgestaltung der Oberfläche derart vorgenommen ist, dass die Vertiefung in Richtung des tiefsten Bereichs 20 zunimmt. Ausgehend von dem tiefsten Bereich 20 in Richtung einer Rückseite 24 nimmt die Tiefe der Vertiefung sodann wieder ab. Der tiefste Bereich 20 stellt somit eine Art Senke dar. Die konkave Ausgestaltung der Aufstandfläche 12 ist derart ausgebildet, dass sie über die gesamte Pedalbreite, d. h. von einer Pedalinnenseite 36 bis zu einer Pedalaußenseite 38 stets konstant ist, d, h, die Tiefe der Vertiefung stets über die gesamte Pedalbreite gleich ist.

Insbesondere bei der dargestellten bevorzugten Ausführungsform des Pedalkörpers 10 ist es bevorzugt, das Oberflächenelement 16 in dem vorderen, d. h. ansteigenden Bereich der konvexen Vertiefung 20 anzuordnen. In diesem Bereich wird der meiste Druck von dem Fuß, insbesondere über das Großzehengelenk ausgeübt. Es handelt sich hierbei somit um den Bereich, in dem es besonders vorteilhaft ist, ein Verrutschen des Fußes zu vermeiden.

## Patentansprüche

1. Fahrradpedal, mit einem von einer Pedalachse (14) drehbar gehaltenen Pedalkörper (10) mit mindestens einer Aufstandfläche (12), **dadurch gekennzeichnet, dass**
die Aufstandfläche (12) zumindest teilweise mit einem rutschhemmenden Oberflächenelement (16) verbunden ist.

2. Fahrradpedal nach Anspruch 1, **dadurch gekennzeichnet, dass** das rutschhemmende Oberfifächenelement (16) durch Verkleben und/oder Verschweißen mit der Aufstandsfläche (12) verbunden ist.

3. Fahrradpedal nach Anspruch 1 oder 2, **dadurch gekennzeichnet, dass** das Oberflächenelement (16) als insbesondere verklebbare Folie ausgebildet ist.

4. Fahrradpedal nach einem der Ansprüche 1 bis 3, **dadurch gekennzeichnet, dass** das Oberflächenelement (16) durch Aufbringen, insbesondere Aufspritzen einer aushärtbaren Masse hergestellt ist.

5. Fahrradpedal nach einem der Ansprüche 1 bis 4, **dadurch gekennzeichnet, dass** das Oberflächenelement (16) durch Einbringen von rutschhemmendem Material in die Aufstandfläche (12) hergestellt ist.

6. Fahrradpedal nach einem der Ansprüche 1 bis 5, **dadurch gekennzeichnet, dass** das Oberflächenelement (16) Kornelemente, insbesondere eine Mineralkörnung aufweist.

7. Fahrradpedal nach Anspruch 6, **dadurch gekennzeichnet, dass** die Kornelemente in die Aufstandfläche (12) und/oder in eine Polymermasse eingebettet sind.

8. Fahrradpedal nach Anspruch 6 oder 7, **dadurch gekennzeichnet, dass** die Kornelemente einen maximalen Durchmesser von 0-2 mm oder einen Durchmesser von 2-4 mm aufweisen.

9. Fahrradpedal nach einem der Ansprüche 1 bis 8, **dadurch gekennzeichnet, dass** die Aufstandfläche 12 eine sich im Wesentlichen über die gesamte Pedalbreite erstreckende Vertiefung (20) aufweist.

10. Fahrradpedal nach Anspruch 9, **dadurch gekennzeichnet, dass** die Tiefe der Vertiefung, ausgehend von einer Rückseite (24) der Aufstandfläche (12) zum tiefsten Bereich (20) insbesondere kontinuierlich zunimmt und vorzugsweise, ausgehend vom tiefsten Bereich (20) zu einer Vorderseite (22) der Aufstandfläche, insbesondere kontinuierlich abnimmt.

11. Fahrradpedal nach Anspruch 9 oder 10, **dadurch gekennzeichnet, dass** die Tiefe der Vertiefung (20) über die Pedalbreite im Wesentlichen konstant ist.

12. Fahrradpedal nach einem der Ansprüche 9 bis 11, **dadurch gekennzeichnet, dass** die Vertiefung (20) konkav ausgebildet ist und sich vorzugsweise von der Rückseite (24) der Aufstandfläche (12) bis zur Vorderseite (22) der Aufstandfläche erstreckt.

13. Fahrradpedal nach einem der Ansprüche 9 bis 12, **dadurch gekennzeichnet, dass** das Fahrradpedal zwei einander gegenüberliegende, identisch ausgebildete Aufstandflächen (12) aufweist.

14. Fahrradpedal nach Anspruch 1 bis 6, **dadurch gekennzeichnet, dass** der tiefste Bereich (20) gegenüber der Rückseite (24) und/oder der Vorderseite (22) der Aufstandsfläche (12) eine Tiefe von 1 bis 4 mm, insbesondere 2 bis 3 mm aufweist.
